# EUROPEAN PATENT SPECIFICATION

(11) **EP 3 014 140 B1**
(45) Date of publication and mention of the grant of the patent: **14.06.2017**
(21) Application number: 13732122.0
(22) Date of filing: 25.06.2013
(51) Int. Cl.: H01H 33/40, F16F 1/04, H01H 3/30

(54) **A HELICAL TORSION SPRING AND A SPRING DRIVE FOR AN ELECTRICAL SWITCHING APPARATUS INCLUDING THE TORSION SPRING**
SPIRALFÖRMIGE TORSIONSFEDER UND FEDERANTRIEB FÜR EINE ELEKTRISCHE SCHALTVORRICHTUNG MIT DIESER TORSIONSFEDER
RESSORT DE TORSION HÉLICOÏDALE ET RAPPEL DE RESSORT POUR UN INTERRUPTEUR ÉLECTRIQUE COMPRENANT UN RESSORT DE TORSION

(43) Date of publication of application: 04.05.2016
(73) Proprietor: ABB Schweiz AG, 5400 Baden (CH)
(72) Inventor: HELL, Anders, S-771 34 Ludvika (SE); STAFFAS, Daniel, S-771 92 Ludvika (SE); TREDOUX, Johannes, S-771 90 Ludvika (SE); HOLMAN, Mats, S-771 42 Ludvika (SE); JACOBSSON, Staffan, S-770 13 Grangärde (SE)
(74) Representative: Helin, William
(86) International application number: PCT/EP2013/063178
(87) International publication number: WO 2014/206444

(56) References cited:
- DE-A1-102011 078 367
- DE-C- 462 983
- GB-A- 191 019 864
- US-A- 1 857 764

## Description

### Field of the invention

The present invention relates to torsion springs comprising a helical spring wire wound around a central axis, and a spring drive for an electrical switching apparatus, such as high voltage circuit breakers.

### Prior Art

A helical torsion spring works by torsion and includes a spring wire in the shape of a helix. The torsion spring is loaded by applying torsion to the ends of the spring so that the diameter of the spring increases or decreases. The spring wire stores mechanical energy when the torsion spring is winded. When the spring wire is loaded, the torsion spring exerts a torque in a direction opposite the winding direction, and proportional to the amount it is winded. A traditional torsion spring wire is solid and has a circular cross-section.

High voltage circuit breakers are arranged for abruptly breaking currents e.g. in case of failures. In order to minimize the damages caused by e.g. a short circuit, the breaker needs to operate very quickly. Typically, the power shall be shut off within milliseconds. The circuit breakers include drive means that act to disconnect movable contacts within the breakers. Such drive means are typically operated by torsion springs or compression springs, and are thus referred to as spring drives.

US8338732 discloses an example of a spring drive for an electrical switching apparatus. The spring drive includes an opening spring and a closing spring. Both of them are helical torsion springs. The torsion spring is a traditional torsion spring with a circular cross-section.

US5,259,599 discloses a helical compression spring for a torsion damper for a motor vehicle including a spring wire with a non-circular cross-section. The cross-section of the wire of the spring has a generally ovoid shape. This spring gives an improvement in weight and reduces the energy consumption.

WO2006/058526 discloses a helical compression spring for a valve drive for an internal combustion engine. The spring has a cross-section provided with a hollow profile. For a valve drive, the spring is optimally stressed while making effective use of the material. However, the spring is not optimally designed to stand the forces exposed to a torsion spring. Further, a hollow spring is difficult to manufacture, and it is difficult to detect cracks in the material.

### Object and summary of the invention

The object of the present invention is to provide a torsion spring with increased efficiency.

This object is achieved by a torsion spring as defined in claim 1.

The torsion spring is characterized in that the spring wire has a cross-section formed by at least one flange aligned with the central axis of the spring and a web connected to the flange and extending in a direction perpendicular to the central axis.

The invention is based on the realization that when a helical torsion spring is subjected to torsion, the spring wire forming the helical torsion spring is subjected to bending.

A web is an elongated element having width that is essentially smaller than its length. The main part of the web is positioned in the center of the spring wire cross-section, where the stresses are low during the bending. By arranging the web so that the longitudinal axis of the web is perpendicular to the central axis of the spring, no bending stresses occur in a center part of the web while maximum stresses occur in the ends of the web. By arranging the flange at the end of the web, and aligning the flange with the central axis of the spring, the flange is positioned where the spring is subjected to most stress due to the bending forces. The flange is stabilizing and supporting the web, and ensures a sufficient structural strength of the spring. Thus, the spring wire is optimally designed to stand the bending forces.

A torsion spring according to the invention has an optimized cross-section with regard to the utilization of the mass of the spring. The mass of a spring wire in accordance of the invention is significantly reduced compared to a traditional spring wire, but the spring wire still provides the same operating torque. Since the mass is reduced, there will be less inertia caused by the spring operation as less mass will be put in motion, and accordingly the efficiency of the spring is increased. Due to the optimized spring cross-section, the torsion spring can be made lighter and cheaper.

The spring according to the invention can be manufactured by bending a conventional beam to form a helix. Due to its open shape, it is also easy to detect cracks in the material.

The term "a helical spring wire" covers a spring wire having windings of equal diameter as well as windings with varying diameter, such as a helical spring tapering towards its end and thus having a conical shape.

According to an embodiment of the invention, the spring wire has a cross-section formed by two flanges arranged in parallel and the web extends between the flanges. By providing a flange on each side of the web, the web is supported and stabilized on both sides, and thus the structural strength of the spring is increased. A spring wire according to this embodiment of the invention, the can have an H-shaped or I - shaped cross-section. A spring wire of H- or I- shaped cross-section is two to three times as efficient as a spring wire having a circular cross-section. The choice between a spring wire of H- or I- shaped cross-section is a matter of stabilizing/supporting needs. The spring can be manufactured by bending a conventional H- beam or I-beam to form a helix.

According to an embodiment of the invention, the spring wire has a T-shaped cross-section. In some applications it is enough to support the web by a flange at one of its ends. This embodiment reduces the mass of the spring and accordingly reduces the weight of the spring. A spring wire according to this embodiment of the invention can be manufacture by bending a conventional T- beam to form a helix.

According to an embodiment of the invention, the flange has two rounded inner edges. The rounded shape of the inner edges reduces the stress on the flange and by that avoids cracking of the flange.

Another object of the present invention is to provide an improved spring drive for an electrical switching apparatus.

This object is achieved by a spring drive comprising a torsion spring according to the invention.

Spring drives with traditional heavy torsion springs, i.e. made from circular and solid spring wire, are subject to large inertial forces when the torsion springs abruptly release their mechanically stored energy during operation. By providing a spring drive with a torsion spring according to the invention, the spring drive is optimized and weight is reduced. The entire spring drive can be redesigned and made lighter, taking advantage of both a lighter torsion spring, and less inertial force.

The invention further relates to the use of a torsion spring according to the invention in a spring drive for an electrical switching apparatus.

The invention further relates to an electrical switching apparatus comprising a spring drive according to the invention, such as switching apparatus for power transmission or distributing networks to provide automatic protection in response to abnormal load conditions or to permit opening or closing of sections of the network. The electrical switching apparatus includes two contacts, where normally one is stationary and the other is mobile. The mobile contact is operated by an opening device comprising a spring drive.

The torsion spring according to the invention can advantageously be used in other applications where it is a desire to reduce the weight of the torsion spring.

### Brief description of the drawings

The invention will now be explained more closely by the description of different embodiments of the invention and with reference to the appended figures.
Fig. 1 shows a perspective view of a torsion spring according to a first embodiment of the invention.
Fig. 2 shows a detail sectional view of the torsion spring shown in figure 2, wherein the spring wire has an H-shaped cross-section.
Fig. 3 shows a detail sectional view of a torsion spring according to a second embodiment of the invention, wherein the spring wire has a T-shaped cross-section.
Fig. 4 shows a detail sectional view of a torsion spring according to a third embodiment of the invention.
Fig. 5 shows a detail sectional view of a torsion spring according to a fourth embodiment of the invention, wherein the spring wire has an I-shaped cross-section.
Fig. 6 shows a detail sectional view of a torsion spring according to a fifth embodiment of the invention.
Fig. 7 shows an axial section through an example of a spring drive for an electrical switching apparatus comprising a torsion spring according to the invention.

### Detailed description of preferred embodiments of the invention

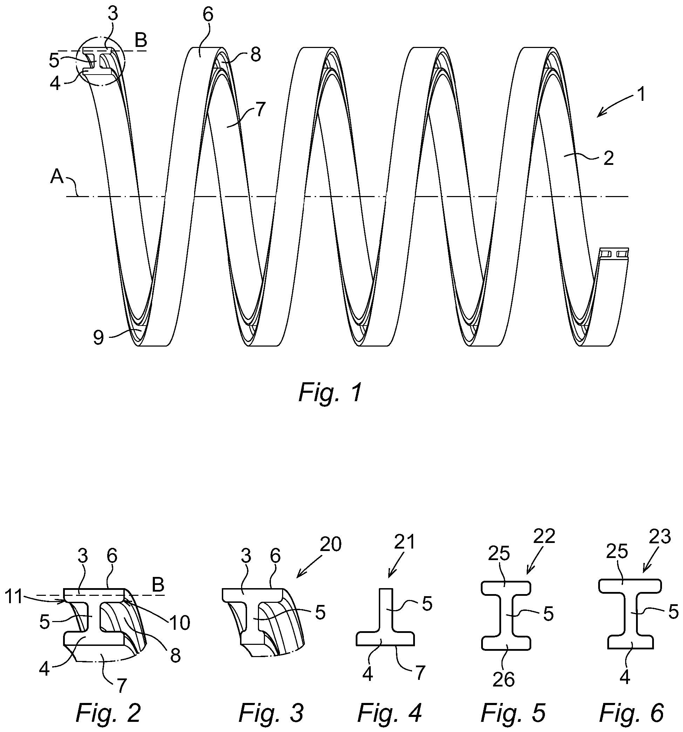

Figure 1 shows a perspective view of a torsion spring 1 according to a first embodiment of the invention. The torsion spring 1 includes a spring wire 2 wound a plurality turns to form a helical spring having a central axis A. The spring wire is, for example, made of a metal such as steel or titanium, or carbon, for example, carbon fibers. An advantage with using carbon is that is light weight.

Figure 2 shows a detail sectional view of the spring wire 2.The spring wire has a uniform cross-section along its entire length. The spring wire 1 has an H-shaped cross-section. The cross-section of the spring wire includes a first flange 3 and a second flange 4 arranged in parallel, and a web 5 connecting the first and second flange. The flanges are connected to opposite sides of the web. The spring wire is wound so that the first flange 3 and the second flange 4 are aligned with the central axis A through the spring. This means that a longitudinal axis B of the flange is in parallel with the central axis A of the spring. The web 5 extends between the flanges 3, 4 in a direction perpendicular to the central axis A. The first flange 3 has an outer surface 6 facing outwards in a direction away from the central axis of the spring, and the second flange 7 has an outer surface 7 facing inwards in a direction towards the central axis of the spring. In this embodiment, the length of the web 5 is shorter than the length of the flanges 3, 4. However, in an alternative embodiment of the invention, the flanges 3, 4 can be shorter than the length of the web 5. With an H-shaped cross-section, the mass in the center of the spring wire is greatly reduced compared to a traditional solid circular cross-section, while the flanges are arranged to withstand the load stress on the spring wire due to the bending forces acting on a torsion spring wire. Thus, the weight of the spring wire is reduced and accordingly the inertia of the spring is reduced.

The first flange 3 has an inner surface 8 facing a corresponding inner surface 9 of the second flange 4. As seen from the figure, the flanges 3, 4 have inner edges 10, 11 neighboring the inner surfaces 8, 9 which are rounded. The inner corners between the flanges and the web are also rounded. The rounded edges and corners reduce the stress on the edges and thus reduce the risk for cracks in the wire.

Figure 3 shows a detail sectional view of a spring wire 20 of a torsion spring according to a second embodiment of the invention. The spring wire 20 has a T-shaped cross-section. The spring wire has a uniform cross-section along its entire length. The cross-section of the spring wire includes a flange 3 and a web 5 connected to the flange 3. The spring wire is wound so that the flange 3 is aligned with a central axis through the spring. The longitudinal axis of the web is perpendicular to the central axis. The web 5 extends from the flange 3 in a direction towards the central axis of the spring. The flange 3 has an outer surface 6 facing outwards in a direction away from the central axis of the spring. With a T-shaped cross-section, the mass in the center of the spring wire is greatly reduced compared to a traditional solid circular cross-section, while the flange is arranged to withstand the load stress on the spring wire due to the bending forces acting on a torsion spring wire as well as to support the web. Thus, the weight of the spring wire is reduced and accordingly the inertia of the spring is reduced.

Figure 4 shows a detail sectional view of a spring wire 21 of a torsion spring according to a third embodiment of the invention. The spring wire 21 also has a T-shaped cross-section. The cross-section of the spring wire 21 includes a flange 4 and a web 5 connected to the flange 4. This embodiment differs from the embodiment shown in figure 3 in that the web 5 extends from the flange 4 in a direction away from the central axis of the spring, and that the flange 4 has an outer surface 7 facing inwards in a direction towards the central axis of the spring.

Figure 5 shows a detail sectional view of a torsion spring according to a fourth embodiment of the invention, wherein the spring has an I-shaped cross-section. This embodiment differs from the embodiment shown in figure 2 in that the length of the flanges 25, 26 is shorter the length of the web 5.

Figure 6 shows a detail sectional view of a torsion spring according to a fifth embodiment of the invention. This embodiment differs from the embodiment shown in figure 2 in that the length of the flanges 25, 4 is not the same. By providing a first, or outer, flange 25 of greater length than a second, or inner, flange 4 the risk of buckling of the inner flange 4 may be reduced.

In common for all the disclosed embodiments, it that the mass in the center of the spring wire is greatly reduced compared to a traditional solid circular cross-section, while the flange/flanges are arranged to withstand the load stress on the spring wire due to the bending forces acting on a torsion spring wire as well as to support the web. Thus, the weight of the spring wire is reduced and accordingly the inertia of the spring is reduced.

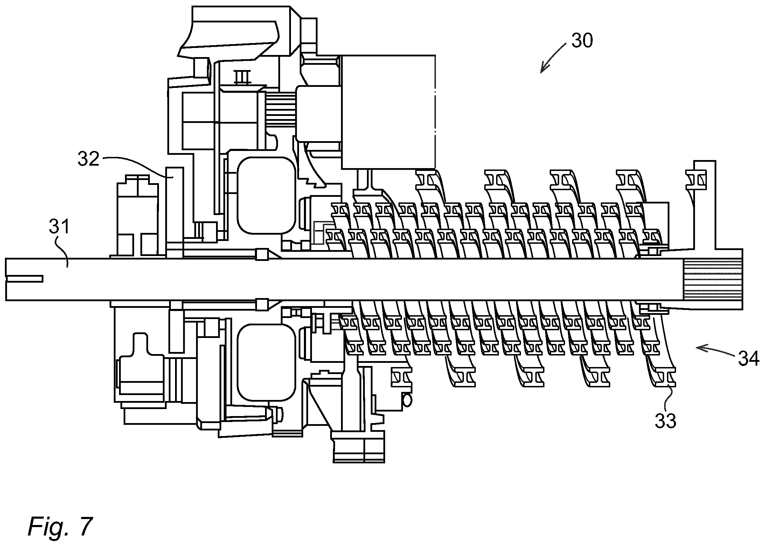

Figure 7 shows an axial section through an example of a spring drive 30 for an electrical switching apparatus. The spring drive has a main shaft 31 and a cam disc 32. The cam disc acts on a transmission rod (not shown) for switching the circuit breaker. The main shaft is operated by an opening spring 33 and a closing spring 34. Both springs are helical torsion springs and are roughly coaxial with the main shaft. The opening spring 33 is located radially outside the closing spring 34 and has a diameter exceeding the external diameter of the closing spring. In this embodiment of the spring drive, the opening and closing springs are the H-shaped torsion spring 1 disclosed in figure 1 and 2. However, it is also possible to use any of the torsion springs disclosed in figures 3 - 6.

The shape of the cross-section of the spring wire is not limited to the embodiments disclosed but may be varied and modified within the scope of the following claims. For example, the web can be asymmetrically positioned with respect to the flanges, the length of the web and the length of the flange may vary.

## Claims

1. An electrical switching apparatus comprising a spring drive (30) comprising a torsion spring (1) comprising a helical spring wire wound around a central axis (A), **characterized in that** the spring wire has a cross-section formed by at least one flange (3; 4; 25, 26) aligned with the central axis (A) of the spring and a web (5) connected to the flange and extending in a direction perpendicular to the central axis.

2. The electrical switching apparatus according to claim 1, wherein the spring wire has a cross-section formed by two flanges (3, 4; 25, 26) arranged in parallel and said web (5) extends between the flanges.

3. The electrical switching apparatus according to claim 1 or 2, wherein said flange (3; 4; 25, 26) has two rounded inner edges.

4. The electrical switching apparatus according to any of the previous claims, wherein the spring wire has an H-shaped or I-shaped cross-section.

5. The electrical switching apparatus according to claim 1, wherein the spring wire has a T-shaped cross-section.

6. Use of a torsion spring in a spring drive for an electrical switching apparatus, **characterized in that** said torsion spring comprises a helical spring wire wound around a central axis (A), which spring wire has a cross-section formed by at least one flange (3; 4; 25, 26) aligned with the central axis (A) of the spring and a web (5) connected to the flange and extending in a direction perpendicular to the central axis.

## Patentansprüche

1. Elektrische Schalteinrichtung, die einen Federantrieb (30) umfasst, der eine Torsionsfeder (1) umfasst, die einen spiralförmigen Federdraht umfasst, der um eine zentrale Achse (A) gewunden ist, **dadurch gekennzeichnet, dass** der Federdraht einen Querschnitt aufweist, der durch wenigstens einen Gurt (3; 4; 25, 26), der mit der zentralen Achse (A) der Feder ausgerichtet ist, und einen Steg (5), der mit dem Gurt verbunden ist und der sich in einer Richtung senkrecht zu der zentralen Achse erstreckt, gebildet wird.

2. Elektrische Schalteinrichtung nach Anspruch 1, wobei der Federdraht einen Querschnitt aufweist, der durch zwei Gurte (3, 4; 25, 26), die parallel angeordnet sind, und den Steg (5), der sich zwischen den Gurten erstreckt, gebildet wird.

3. Elektrische Schalteinrichtung nach Anspruch 1 oder 2, wobei der Gurt (3; 4; 25, 26) zwei abgerundete innere Kanten aufweist.

4. Elektrische Schalteinrichtung nach einem der vorhergehenden Ansprüche, wobei der Federdraht einen H-förmigen oder I-förmigen Querschnitt aufweist.

5. Elektrische Schalteinrichtung nach Anspruch 1, wobei der Federdraht einen T-förmigen Querschnitt aufweist.

6. Verwendung einer Torsionsfeder in einem Federantrieb für eine elektrische Schalteinrichtung, **dadurch gekennzeichnet, dass** die Torsionsfeder einen spiralförmigen Federdraht umfasst, der um eine zentrale Achse (A) gewunden ist, wobei der Federdraht einen Querschnitt aufweist, der durch wenigstens einen Gurt (3; 4; 25, 26), der mit der zentralen Achse (A) der Feder ausgerichtet ist, und einen Steg (5), der mit dem Gurt verbunden ist und der sich in einer Richtung senkrecht zu der zentralen Achse erstreckt, gebildet wird.

## Revendications

1. Appareil de commutation électrique comprenant un mécanisme d'entraînement à ressort (30) comprenant un ressort de torsion (1) comprenant un fil de ressort hélicoïdal enroulé autour d'un axe médian (A), **caractérisé en ce que** le fil de ressort présente une section transversale formée par au moins une semelle (3 ; 4 ; 25, 26) alignée sur l'axe médian (A) du ressort et une âme (5) raccordée à la semelle et s'étendant dans une direction perpendiculaire à l'axe médian.

2. Appareil de commutation électrique selon la revendication 1, dans lequel le fil de ressort présente une section transversale formée par deux semelles (3, 4 ; 25, 26) disposées parallèlement et ladite âme (5) s'étend entre les semelles.

3. Appareil de commutation électrique selon la revendication 1 ou 2, dans lequel ladite semelle (3 ; 4 ; 25, 26) comporte deux bords intérieurs arrondis.

4. Appareil de commutation électrique selon l'une quelconque des revendications précédentes, dans lequel le fil de ressort présente une section transversale en forme de H ou en forme de I.

5. Appareil de commutation électrique selon la revendication 1, dans lequel le fil de ressort présente une section transversale en forme de T.

6. Utilisation d'un ressort de torsion dans un mécanisme d'entraînement à ressort pour un appareil de commutation électrique, **caractérisée en ce que** ledit ressort de torsion comprend un fil de ressort hélicoïdal enroulé autour d'un axe médian (A), ledit fil de ressort présentant une section transversale formée par au moins une semelle (3 ; 4 ; 25, 26) alignée sur l'axe médian (A) du ressort et une âme (5) raccordée à la semelle et s'étendant dans une direction perpendiculaire à l'axe médian.
